# FASCICULE DE BREVET EUROPEEN

(11) **EP 2 782 175 B1**
(45) Date de publication et mention de la délivrance du brevet: **17.01.2018**
(21) Numéro de dépôt: 14159650.2
(22) Date de dépôt: 13.03.2014
(51) Int. Cl.: H01M 4/88, C25B 9/10

(54) **Procédé de fabrication d'un assemblage membrane-électrode**
Herstellungsverfahren einer Membran-Elektroden-Zusammensetzung
Method for manufacturing a membrane-electrode assembly

(30) Priorité: 22.03.2013 FR 1352579
(43) Date de publication de la demande: 24.09.2014
(73) Titulaire: Commissariat à l'Énergie Atomique et aux Énergies Alternatives, 75015 Paris (FR)
(72) Inventeur: VINCENT, Rémi, 38000 GRENOBLE (FR); MAYOUSSE, Eric, 38000 GRENOBLE (FR); TREMBLAY, Denis, 38340 POMMIERS-LA-PLACETTE (FR)
(74) Mandataire: GIE Innovation Competence Group

(56) Documents cités:
- EP-A2- 1 489 677
- WO-A1-2007/089908
- US-A1- 2007 248 846
- US-A1- 2010 221 639
- US-B2- 7 993 499
- MEHTA V ET AL: "Review and analysis of PEM fuel cell design and manufacturing", JOURNAL OF POWER SOURCES, ELSEVIER SA, CH, vol. 114, no. 1, 25 février 2003 (2003-02-25), pages 32-53, XP004412816, ISSN: 0378-7753, DOI: 10.1016/S0378-7753(02)00542-6

## Description

L'invention concerne la production de gaz par électrolyse, et en particulier les dispositifs de production d'hydrogène utilisant une membrane échangeuse de protons pour mettre en oeuvre une électrolyse à basse température de l'eau.

Les piles à combustible sont envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Du dihydrogène est utilisé comme carburant de la pile à combustible. Le dihydrogène est oxydé sur une électrode de la pile et du dioxygène de l'air est réduit sur une autre électrode de la pile. La réaction chimique produit de l'eau. Le grand avantage de la pile à combustible est d'éviter des rejets de composés polluants atmosphériques sur le lieu de génération d'électricité.

Une des difficultés majeures du développement de telles piles à combustible réside dans la synthèse et l'approvisionnement en dihydrogène. Sur terre, l'hydrogène n'existe en grande quantité que combiné à l'oxygène (sous forme d'eau), au soufre (sulfure d'hydrogène), à l'azote (Ammoniac) ou au carbone (combustibles fossiles de types gaz naturel ou pétroles). La production de dihydrogène nécessite donc soit de consommer des combustibles fossiles, soit de disposer de conséquentes quantités d'énergie à faible coût, pour l'obtenir à partir de la décomposition de l'eau, par voie thermique ou électrochimique.

Le procédé de production d'hydrogène à partir de l'eau le plus répandu consiste ainsi à utiliser le principe de l'électrolyse. Pour la mise en oeuvre de tels procédés, des électrolyseurs munis d'une membrane échangeuse de protons (dites PEM pour Proton Exchange Membrane en langue anglaise) sont connus. Dans un tel électrolyseur, une anode et une cathode sont fixées de part et d'autre de la membrane échangeuse de protons et mises en contact avec de l'eau. Une différence de potentiel est appliquée entre l'anode et la cathode. Ainsi, de l'oxygène est produit à l'anode par oxydation de l'eau. L'oxydation au niveau de l'anode génère également des ions H⁺ qui traversent la membrane échangeuse de protons jusqu'à la cathode et des électrons sont renvoyés à la cathode par l'alimentation électrique. Au niveau de la cathode, les ions H⁺ sont réduits au niveau de la cathode pour générer du dihydrogène.

Le potentiel de l'électrode standard à hydrogène (ESH) (à 100 kPa et 298,15 K) du couple H⁺/H₂ est égal à 0V. Le potentiel standard ESH du couple O₂/H₂O est égal à 1,23V ESH. Dans cette description, les potentiels sont exprimés par rapport au potentiel de l'électrode standard à hydrogène et sont notés « V ESH ». Les matériaux anodiques doivent donc résister à des potentiels élevés (typiquement>1,5V ESH). On utilise pour cela le plus souvent des matériaux nobles comme le platine à la cathode ou l'iridium à l'anode.

Les performances des électrolyseurs présentent des limitations qui sont en partie liées au procédé de fabrication de l'assemblage membrane-électrodes.

Parmi les procédés de fabrication connus, on distingue une première catégorie de procédés par dépôt et séchage d'encres électrocatalytiques directement sur la membrane, et une deuxième catégorie de procédé par dépôt et séchage d'encre sur le matériau d'un distributeur de courant placé en vis-à-vis d'une électrode.

La réalisation d'assemblages membrane/électrodes (AME) par dépôt de deux couches électrocatalytiques sur deux faces opposées d'une membrane peut être mise en oeuvre selon plusieurs variantes différentes.

Selon une première variante, on dépose indépendamment les encres anodique et cathodique sur des supports externes. On transfère ensuite ces dépôts sur la membrane lors d'un pressage à chaud. Cette variante présente l'avantage de pouvoir maîtriser les chargements en catalyseur dans les électrodes. En revanche, le transfert est parfois délicat, notamment lorsque les deux dépôts sont transférés simultanément. Un transfert simultané des deux dépôts évite de faire deux pressages à chaud qui pourraient créer des contraintes thermiques et mécaniques susceptibles de fragiliser la membrane lors de son utilisation future. Cette variante présente cependant un taux relativement élevé de rebuts irréversibles. En effet, même si un seul des deux transferts est raté, cela entraîne le rebut des deux électrodes et de la membrane.

Selon une seconde variante, par exemple décrite dans la demande de brevet WO 2012/044273 A1 (UTC POWER CORPORATION), on dépose directement de l'encre électrocatalytique sur la membrane échangeuse de protons. Ce dépôt engendre initialement un gonflement de la membrane, une rétractation intervenant ensuite au séchage, avec des amplitudes relativement importantes car la membrane est peu maintenue. Ces déformations engendrent des contraintes mécaniques au niveau des dépôts pouvant induire des craquelures dans les électrodes. La conséquence directe de telles craquelures est une réduction de la percolation électronique de l'électrode et donc la diminution de sa conductivité électrique. De plus, les craquelures peuvent altérer la cohésion électrode/membrane.

Lors du fonctionnement, la membrane est totalement immergée dans l'eau. Cette immersion rend son taux de gonflement maximal, ce qui accentue les contraintes mécaniques présentes à l'interface électrode-membrane. Cette déstructuration de l'AME réduit le rendement énergétique de l'électrolyseur ainsi que sa durée de vie.

Un autre problème lié à cette variante provient de l'endommagement de la membrane par les solvants présents dans l'encre électrocatalytique, par exemple de l'éthanol, de l'isopropanol... Cet endommagement augmente la perméabilité de la membrane, ce qui réduit la durée de vie de l'électrolyseur. De plus, les gaz produits par l'électrolyseur sont alors moins purs, ce qui peut s'avérer rédhibitoire pour l'utilisation de l'électrolyseur.

Par ailleurs, après avoir déposé une première électrode sur la membrane, cette membrane n'est plus parfaitement plane pour procéder au dépôt de la seconde électrode. Les problèmes de contraintes et d'hétérogénéités cités précédemment sont alors amplifiés pour cette seconde électrode.

La méthode qui consiste à déposer de l'encre électrocatalytique sur le distributeur de courant présente quelques inconvénients, principalement à l'anode. En effet, les surtensions nécessaires à l'électrooxydation de l'eau sont élevées. Ainsi le potentiel anodique des électrolyseurs PEM est en général très élevé (>1,6 VESH) rendant impossible l'utilisation de matériaux carbonés et notamment de couches de diffusion en carbone (feutre, papiers, tissus) classiquement utilisées du coté cathodique ou en pile à combustible à membrane échangeuse de protons. Les distributeurs de courants utilisés à l'anode sont donc généralement des frittés de titane poreux ou des grilles de titane. Le dépôt direct de la couche électrocatalytique a pour défaut majeur de colmater le distributeur, limitant ainsi le transport de l'eau jusqu'au catalyseur. De plus, lorsque la couche électrocatalytique est déposée sur le distributeur, une partie du catalyseur est logée à l'intérieur des pores du distributeur et ne participe pas au fonctionnement. Aussi, l'interface électrode/membrane est globalement peu satisfaisante. Ces inconvénients se traduisent par une limitation notable des performances de l'électrolyseur.

En outre, le dépôt sur le distributeur rend le recyclage de l'électrolyseur difficile car la séparation des métaux nobles présents dans les interstices du distributeur de courant devient plus délicate. De plus, les distributeurs fréquemment utilisés tels que les frittés de titane poreux nécessitent un usinage onéreux, ce qui limite économiquement la possibilité d'utiliser un fritté pour chaque assemblage membrane/électrodes. En outre le document WO2007/089908 décrit un procédé de fabrication d'un assemblage membrane-électrodes dans lequel un assemblage partiel est d'abord formé par le dépôt d'une encre électro-catalytique cathodique sur une couche de diffusion gazeuse puis l'assemblage de cette électrode avec la membrane de telle sorte que la couche de catalyseur soit disposée entre la membrane et la couche de diffusion gazeuse. Ce procédé comprend ensuite la déposition par pressage à chaud de l'anode sur l'autre face de la membrane, la couche de catalyseur étant une encre sous forme aqueuse au préalablement déposée sur la couche de diffusion gazeuse, pour compléter l'assemblage membrane-électrodes. L'invention vise à résoudre un ou plusieurs de ces inconvénients. L'invention porte ainsi sur un procédé de fabrication d'un assemblage membrane-électrodes à membrane échangeuse de protons, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe schématique d'un exemple de dispositif d'électrolyse incorporant un assemblage membrane-électrodes ;
- la figure 2 est un organigramme d'un procédé de fabrication de l'assemblage membrane/électrodes de la figure 1 ;
- les figures 3 à 7 illustrent la fabrication de l'assemblage membrane-électrodes de la figure 1 au cours de différentes étapes du procédé de la figure 2.

L'invention propose un procédé de fabrication d'un assemblage membrane-électrodes à membrane échangeuse de protons. L'élaboration de la cathode sur une couche de diffusion gazeuse puis l'assemblage de cette couche de diffusion gazeuse avec une membrane à échange de protons, préalablement à l'élaboration de l'anode, réduit le risque d'endommagement de cette membrane à échange de protons lors de l'élaboration de l'anode.

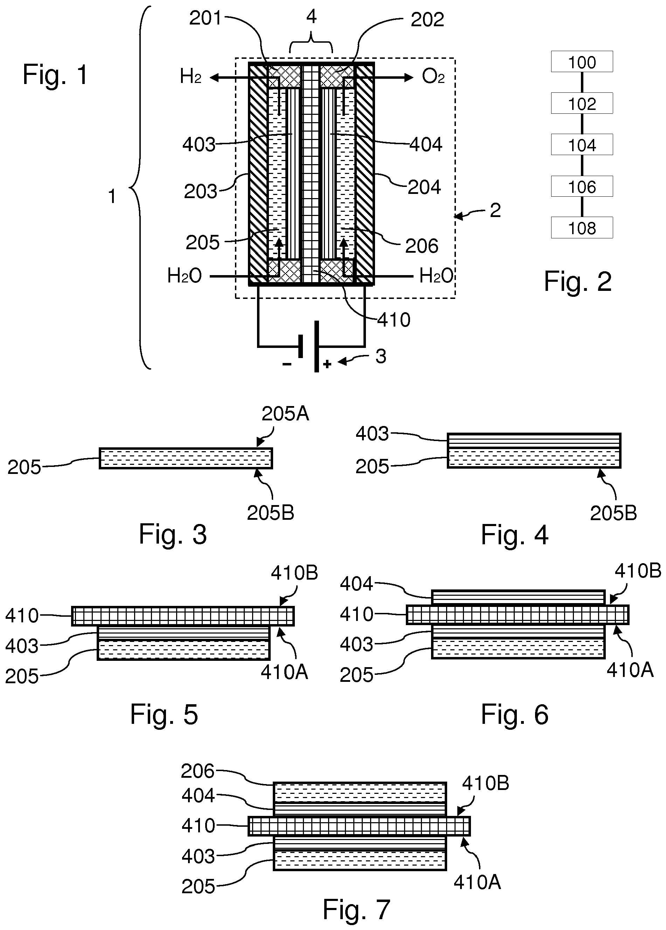

La figure 1 représente un dispositif d'électrolyse 1. Ce dispositif 1 est apte à produire du dihydrogène (H₂) par électrolyse d'eau (H₂O) lorsqu'une différence de potentiel électrique est appliquée entre une anode et une cathode de ce dispositif 1. Cette production de dihydrogène par électrolyse de l'eau comporte la réalisation simultanée des réactions chimiques suivantes : 2H₂O → 4H⁺ + 4e⁻ + O₂ et 2H⁺ + 2e⁻ → H₂.

A cet effet, ce dispositif 1 comprend une cellule électrochimique 2 et une alimentation électrique 3.

La cellule électrochimique 2 comprend :
- un assemblage membrane-électrodes (AME) 4,
- deux joints d'étanchéité 201 et 202,
- deux plaques d'alimentation électrique 203 et 204, réalisés en un matériau électriquement conducteur, et
- deux couches de diffusion gazeuses (aussi nommées « distributeurs de courant poreux ») 205 et 206.

L'assemblage 4 comprend une membrane échangeuse de protons 410, ainsi qu'une cathode 403 et une anode 404.

La membrane 410 a pour fonction d'être traversée par des protons provenant de l'anode 404 vers la cathode 403 lors de l'électrolyse de l'eau, tout en bloquant les électrons ainsi que le dioxygène (O₂) et le dihydrogène générés par l'électrolyse de l'eau. La perméabilité de la membrane échangeuse de protons au dihydrogène est supérieure à sa perméabilité au dioxygène. Dans cet exemple, la membrane 410 est une couche d'un matériau polymère fluoré, tel que le matériau distribué sous la référence commerciale « Nafion » par la société DuPont. La membrane 410 est ici de forme plane.

La cathode 403 et l'anode 404 sont fixées de part et d'autre de cette membrane 410, sur des faces opposées de cette membrane 410. La cathode 403 est fixée sur une première face de la membrane 410. L'anode 404 est fixée sur une deuxième face de la membrane 410 opposée à la première face. Chacune de la cathode 403 et de l'anode 404 comporte un matériau catalyseur configuré pour favoriser les réactions chimiques d'électrolyse. Ce matériau catalyseur est typiquement un métal noble. Par exemple, le matériau catalyseur de la cathode 403 est du platine.

Dans cette description, la cathode 403 et l'anode 404 sont réalisées par dépôt d'une couche d'encre électro-catalytique. Dans cette description, on désignera par « encre électro-catalytique cathodique » la couche d'encre formant la cathode 403, et par « encre électro-catalytique anodique » la couche d'encre formant l'anode 404. Le procédé d'élaboration de cette cathode 403 et de cette anode 404 sera décrit plus en détail par la suite, en référence, notamment, à la figure 2.

Dans cet exemple, l'encre électro-catalytique anodique inclut, avant dépôt, un mélange des éléments suivants :
- un catalyseur, en suspension dans un solvant aqueux ;
- un liant, comportant un polymère, tel qu'un ionomère, en suspension dans un solvant organique, tel que de l'alcool.

L'extrait sec de cette encre présente ici une concentration massique en catalyseur inférieure à 10%, ou inférieure à 8%, ou inférieure à 5%. Ce catalyseur est ici de l'oxyde d'iridium.

Le rapport des concentrations massiques d'extrait sec du liant par rapport au catalyseur dans ce mélange est avantageusement inférieur ou égal à 30%, ou inférieur ou égal à 20%, ou inférieur ou égal à 15% et, de préférence, égal à 10%. Ce rapport des concentrations massiques est avantageusement supérieur ou égal à 3%.

La concentration massique totale d'alcool dans ce mélange est avantageusement inférieure à 10% ou inférieure à 5% ou inférieure à 3%.

La plaque 203 présente un conduit d'alimentation en eau, en communication avec la cathode 403 par l'intermédiaire de la couche 205. La plaque 203 présente également un conduit d'évacuation de dihydrogène, en communication avec la cathode 403 par l'intermédiaire de la couche 205.

La plaque 204 présente un conduit d'alimentation en eau, en communication avec l'anode 404 par l'intermédiaire de la couche 206. La plaque 204 présente également un conduit d'évacuation de dioxygène en communication avec l'anode 404 par l'intermédiaire de la couche 206.

Pour simplifier la figure 1, ces conduits ne sont pas représentés en détail.

Les couches 205 et 206 de diffusion gazeuse (« gas diffusion layer » en langue anglaise) ont pour fonction de permettre la circulation :
- de l'eau, du dihydrogène et du dioxygène entre l'assemblage 4 et les conduits d'alimentation respectifs des plaques 203 et 204 ;
- des porteurs de charge entre l'assemblage 4 et le circuit 3.

A cet effet, la couche 205 est interposée entre la cathode 403 et la plaque 203. La couche 206 est interposée entre l'anode 404 et la plaque 204. La couche 205 est par exemple un support carboné poreux formant une couche de diffusion gazeuse (par exemple du feutre, du papier ou tissu carboné). La couche 206 comporte ici un matériau apte à supporter un potentiel électrique élevé (par exemple supérieur ou égal à 1,6 V ESH) qui est typiquement présent à l'anode 404 lors de la réaction d'électrolyse. Cette couche 206 comporte ici une couche formée par frittage de titane poreux, ou une grille réalisée en titane. Ces couches 205 et 206 présentent chacune une rigidité comprise entre 2 et 40 unités sur l'échelle de rigidité de Taber, telle que définie par la société « Taber industries ». Avantageusement, cette rigidité est comprise entre 10 et 30 unités de rigidité de Taber. On considère ici que 10 unités de Taber correspondent à une rigidité de 0,981 mN.m.

L'alimentation électrique 3 est configurée pour appliquer une tension continue entre les plaques 203 et 204. Cette tension est ici choisie pour que la densité de courant circulant dans les plaques 203 et 204 soit comprise entre 10 et 40 000 A/m², et avantageusement comprise entre 500 et 40 000 A/m². Cette tension est ici comprise entre 1,3 V et 3,0 V. Par application d'une telle tension, une réaction d'oxydation de l'eau au niveau de l'anode 404 produit du dioxygène et simultanément, une réaction de réduction de protons au niveau de la cathode 403 produit du dihydrogène. La réaction à l'anode 404 est la suivante : 2H₂O→4H⁺ + 4e⁻ + O₂.

Les protons (H⁺) générés par cette réaction traversent la membrane échangeuse de protons 410 jusqu'à la cathode 403. L'alimentation 3 conduit les électrons générés par la réaction anodique jusqu'à la cathode 403. La réaction à la cathode 403 est ainsi la suivante : 2H⁺ + 2e⁻ → H₂.

Un exemple d'un procédé de fabrication de l'assemblage 4 va maintenant être décrit, en référence à l'organigramme de la figure 2 et à l'aide des figures 3 à 6.

Lors d'une étape 100, la couche de diffusion 205 est fournie, comme illustré par la figure 3. Cette couche 205 présente une forme essentiellement plane et présente deux faces 205A et 205B opposées.

Puis, lors d'une étape 102, la cathode 403 est formée sur une face de cette couche 205, comme illustré par la figure 4. Ici, cette cathode 403 est formée par dépôt d'une couche d'encre électro-catalytique sur la face 205A, au moyen d'une technique de dépôt par voie humide, puis par séchage de cette encre électro-catalytique. À l'issue de cette étape, la cathode 403 est solidaire, sans degré de liberté, de la face 205A.

Ensuite, lors d'une étape 104, la membrane 410 est assemblée avec la couche 205, comme illustré par la figure 5. Les deux faces principales de la membrane 410 portent ici les références 410A et 410B. Cet assemblage comporte la mise en contact de la cathode 403 déposée sur la face 205A avec une face 410A de la membrane 410. Cet assemblage est ici réalisé au moyen d'une opération de pressage à chaud. Lors de cette opération de pressage à chaud, ces deux faces sont mises en contact direct l'une avec l'autre, puis sont portées à une température supérieure ou égale à 120°C ou à 130°C ou à 135°C, et maintenues en contact par application d'une pression mécanique, exercée perpendiculairement aux faces 205A et 410A, supérieure ou égale à 1MPa ou à 1,5MPa ou à 2MPa et, de préférence, égale à 3,5MPa. Cette opération de pressage à chaud présente par exemple une durée supérieure à 3 minutes ou supérieure à 4 minutes ou supérieure à 5 minutes.

À l'issue de cette étape, la membrane 410 est maintenue solidaire, sans degré de liberté, de la couche 205, du fait de l'adhésion entre la cathode 403 et la face 410A. Du fait de la rigidité de la couche 205, le risque de gonflement de la membrane 410 ou d'apparition de contraintes mécaniques dans cette membrane 410 est réduit, notamment lors d'étapes ultérieures de réalisation de l'anode 404.

Ensuite, lors d'une étape 106, l'anode 404 est formée sur la face 410B de la membrane 410, comme illustré par la figure 6. Dans cet exemple, l'anode 404 est formée par dépôt d'une couche d'encre électro-catalytique anodique sur la face 410B, par voie humide puis par séchage. À l'issue de cette étape, l'anode 404 est solidaire, sans degré de liberté, de la membrane 410.

Enfin, lors d'une étape 108, illustrée par la figure 7, la couche 206 est assemblée avec la membrane 410. Cet assemblage comporte la mise en contact de l'anode 404 déposée sur la face 410B avec une face de la couche 206, pour que la couche 206 soit solidarisée, sans degré de liberté, avec la membrane 410, par adhésion entre l'anode 404 et la face 410B. Par exemple, cet assemblage comporte une opération de pressage à chaud réalisée avec les mêmes paramètres de force, de température et de durée que ceux décrits pour l'opération de pressage à chaud de l'étape 104. Avantageusement, lors d'étapes ultérieures, les joints 201 et 202 sont ajoutés pour former la cellule 2.

De nombreux autres modes de réalisation sont possibles.

L'assemblage 4 ainsi fabriqué peut être utilisé dans un dispositif autre que le dispositif 1. Par exemple, cet assemblage est utilisé dans une pile à combustible.

La composition des encres électro-catalytiques cathodique et anodique formant, respectivement, la cathode 403 et l'anode 404 peut être différente. Notamment, le matériau catalyseur de chacune de ces encres peut être différent. Par exemple, le catalyseur de l'encre électro-catalytique anodique comporte un alliage d'indium et d'iridium.

En variante, le liant de l'encre électro-catalytique anodique est un ionomère tel que le matériau distribué sous le nom commercial « Aquivion » par la société « Solvay », ou encore le matériau distribué sous le nom « Fumion » par la société « Fuma Tech GmbH ».

Les paramètres de l'opération de pressage à chaud peuvent être choisis différemment.

## Revendications

1. Procédé de fabrication d'un assemblage membrane-électrodes à membrane échangeuse de protons, **caractérisé en ce que** ce procédé comporte :
- la fourniture (100) d'une membrane (410) échangeuse de protons ;
- le dépôt (102) d'encre électro-catalytique cathodique sur une première face (205A) d'une première couche (205) de diffusion gazeuse ;
- l'assemblage (104) de la membrane échangeuse de protons avec la première couche de diffusion gazeuse, incluant la solidarisation de la première face de la première couche de diffusion gazeuse avec une première face (410A) de la membrane échangeuse de protons ;
- puis, le dépôt (106) d'encre électro-catalytique anodique sur une deuxième face (410B) de la membrane échangeuse de protons, opposée à la première face ;
- puis, l'assemblage (108) d'une seconde couche de diffusion gazeuse avec la membrane incluant la solidarisation de sa deuxième face avec une première face de la seconde couche (206) de diffusion gazeuse.

2. Procédé selon la revendication 1, dans lequel l'encre électro-catalytique anodique déposée inclut un mélange des éléments suivants :
- un catalyseur en suspension dans un solvant aqueux ;
- un liant comportant un polymère en suspension dans un solvant organique.

3. Procédé selon la revendication 2, dans lequel le mélange de l'encre électro-catalytique anodique comporte de l'alcool avec une concentration massique inférieure à 5%.

4. Procédé selon les revendications 2 ou 3, dans lequel le catalyseur de l'encre électro-catalytique anodique comporte de l'oxyde d'iridium.

5. Procédé selon l'une quelconque des revendications 2 à 4, dans lequel l'extrait sec de l'encre électro-catalytique anodique présente une concentration massique en catalyseur inférieure à 10%.

6. Procédé selon l'une quelconque des revendications 2 à 5, dans lequel le liant de l'encre électro-catalytique anodique comporte un ionomère.

7. Procédé selon l'une quelconque des revendications 2 à 6, dans lequel le rapport des concentrations massiques d'extrait sec du liant et du catalyseur de l'encre électro-catalytique anodique est inférieur ou égal à 30%.

8. Procédé selon l'une quelconque des revendications précédentes, dans lequel l'encre électro-catalytique cathodique comporte un matériau carboné.

9. Procédé selon l'une quelconque des revendications précédentes, dans lequel l'encre électro-catalytique cathodique comporte du platine.

10. Procédé selon l'une quelconque des revendications précédentes, dans lequel l'assemblage (104) de la membrane avec la première électrode de diffusion gazeuse est réalisé par pressage à chaud.

11. Procédé selon la revendication 10, dans lequel le pressage à chaud est réalisé à une température supérieure ou égale à 120°C, avec une pression supérieure ou égale à 1 MPa, pendant une durée supérieure à 3 minutes.

12. Procédé selon l'une quelconque des revendications précédentes, dans lequel les première (205) et seconde (206) couches de diffusion gazeuse fournies présentent une rigidité comprise entre 2 et 40 unités sur l'échelle de rigidité de Taber.

13. Procédé selon l'une quelconque des revendications précédentes, dans lequel ladite solidarisation de la première couche de diffusion gazeuse est réalisée par adhésion de l'encre électro-catalytique cathodique déposée avec la première face de la membrane échangeuse de protons.

14. Procédé selon l'une quelconque des revendications précédentes, dans lequel ladite solidarisation de la seconde couche de diffusion gazeuse est réalisée par adhésion de l'encre électro-catalytique anodique déposée avec la première face de la seconde couche de diffusion gazeuse.

## Patentansprüche

1. Verfahren zum Herstellen einer Membran-Elektroden-Anordnung mit Protonenaustauschmembran, **dadurch gekennzeichnet, dass** dieses Verfahren Folgendes umfasst:
- Bereitstellen (100) einer Protonenaustauschmembran (410);
- Aufbringen (102) einer kathodischen elektrokatalytischen Tinte auf eine erste Fläche (205A) einer ersten Gasdiffusionsschicht (205);
- Zusammenfügen (104) der Protonenaustauschmembran mit der ersten Gasdiffusionsschicht einschließlich des Befestigens der ersten Fläche der ersten Gasdiffusionsschicht an einer ersten Fläche (410A) der Protonenaustauschmembran;
- anschließend Aufbringen (106) einer anodischen elektrokatalytischen Tinte auf eine zweite Fläche (410B) der Protonenaustauschmembran, die sich gegenüber der ersten Fläche befindet;
- dann Zusammenfügen (108) einer zweiten Gasdiffusionsschicht mit der Membran einschließlich des Befestigens ihrer zweiten Fläche an einer ersten Fläche der zweiten Gasdiffusionsschicht (206).

2. Verfahren nach Anspruch 1, wobei die abgelagerte anodische elektrokatalytische Tinte ein Gemisch der folgenden Elemente enthält:
- einen Katalysator in Suspension in einer wässrigen Lösung;
- ein Bindemittel, das ein Polymer in Suspension in einer organischen Lösung enthält.

3. Verfahren nach Anspruch 2, wobei das Gemisch der anodischen elektrokatalytischen Tinte Alkohol mit einer Massenkonzentration von weniger als 5 % enthält.

4. Verfahren nach den Ansprüchen 2 oder 3, wobei der Katalysator der anodischen elektrokatalytischen Tinte Iridiumoxid enthält.

5. Verfahren nach einem der Ansprüche 2 bis 4, wobei der Trockenextrakt der anodischen elektrokatalytischen Tinte eine Katalysator-Massenkonzentration von weniger als 10 % aufweist.

6. Verfahren nach einem der Ansprüche 2 bis 5, wobei das Bindemittel der elektrokatalytischen Tinte ein Ionomer enthält.

7. Verfahren nach einem der Ansprüche 2 bis 6, wobei das Verhältnis der Massenkonzentrationen des Trockenextrakts des Bindemittels und des Katalysators der anodischen elektrokatalytischen Tinte kleiner oder gleich 30 % ist.

8. Verfahren nach einem der vorhergehenden Ansprüche, wobei die kathodische elektrokatalytische Tinte ein mit Kohlenstoff angereichertes Material enthält.

9. Verfahren nach einem der vorhergehenden Ansprüche, wobei die kathodische elektrokatalytische Tinte Platin enthält.

10. Verfahren nach einem der vorhergehenden Ansprüche, wobei das Zusammenfügen (104) der Membran mit der ersten Gasdiffusionselektrode durch Heißpressen ausgeführt wird.

11. Verfahren nach Anspruch 10, wobei das Heißpressen bei einer Temperatur größer oder gleich 120 °C bei einem Druck größer oder gleich 1 MPa während einer Dauer von mehr als 3 Minuten ausgeführt wird.

12. Verfahren nach einem der vorhergehenden Ansprüche, wobei die erste (205) und die zweite (206) bereitgestellte Gasdiffusionsschicht eine Starrheit im Bereich von 2 bis 40 Einheiten auf der Taber-Starrheitsskala aufweist.

13. Verfahren nach einem der vorhergehenden Ansprüche, wobei das Befestigen der ersten Gasdiffusionsschicht durch Anhaften der abgelagerten kathodischen elektrokatalytischen Tinte an der ersten Fläche der Protonenaustauschmembran ausgeführt wird.

14. Verfahren nach einem der vorhergehenden Ansprüche, wobei das Befestigen der zweiten Gasdiffusionsschicht durch Anhaften der abgelagerten anodischen elektrokatalytischen Tinte an der ersten Fläche der zweiten Gasdiffusionsschicht ausgeführt wird.

## Claims

1. Method for fabricating a membrane-electrode assembly with proton-exchange membrane, **characterized in that** the method comprises:
- the supply (100) of a proton-exchange membrane (410);
- the deposition (102) of cathodic electrocatalytic ink on a first face (205A) of a first gas diffusion layer (205);
- the assembly (104) of the proton-exchange membrane with the first gas diffusion layer, including the securing of the first face of the first gas diffusion layer with a first face (410A) of the proton-exchange membrane;
- then, the deposition (106) of anodic electrocatalytic ink on a second face (410B) of the proton-exchange membrane, opposite the first face;
- then, the assembly (108) of a second gas diffusion layer with the membrane including the securing of its second face with a first face of the second gas diffusion layer (206).

2. Method according to Claim 1, in which deposited anodic electrocatalytic ink includes a mixture of the following elements:
- a catalyst in suspension in an aqueous solvent;
- a binder comprising a polymer in suspension in an organic solvent.

3. Method according to Claim 2, in which the mixture of the anodic electrocatalytic ink comprises alcohol with a concentration by weight less than 5%.

4. Method according to Claim 2 or 3, in which the catalyst of the anodic electrocatalytic ink comprises iridium oxide.

5. Method according to any one of Claims 2 to 4, in which the dry extract of the anodic electrocatalytic ink exhibits a concentration by weight of catalyst less than 10%.

6. Method according to any one of Claims 2 to 5, in which the binder of the anodic electrocatalytic ink comprises an ionomer.

7. Method according to any one of Claims 2 to 6, in which the ratio of the concentrations by weight of dry extract of the binder and of the catalyst of the anodic electrocatalytic ink is less than or equal to 30%.

8. Method according to any one of the preceding claims, in which the cathodic electrocatalytic ink comprises a carbonaceous material.

9. Method according to any one of the preceding claims, in which the cathodic electrocatalytic ink comprises platinum.

10. Method according to any one of the preceding claims, in which the assembly (104) of the membrane with the first gas diffusion electrode is performed by hot pressing.

11. Method according to Claim 10, in which the hot pressing is performed at a temperature of greater than or equal to 120°C, with a pressure greater than or equal to 1 MPa, for a duration greater than 3 minutes.

12. Method according to any one of the preceding claims, in which the first (205) and second (206) gas diffusion layers supplied exhibit a rigidity of between 2 and 40 units on the Taber rigidity scale.

13. Method according to any one of the preceding claims, in which said securing of the first gas diffusion layer is performed by adhesion of the deposited cathodic electrocatalytic ink with the first face of the proton-exchange membrane.

14. Method according to any one of the preceding claims, in which said securing of the second gas diffusion layer is performed by adhesion of the deposited anodic electrocatalytic ink with the first face of the second gas diffusion layer.
